Europäisches Patentamt

European Patent Office

Office européen des brevets

(11) Veröffentlichungsnummer: **0 393 553**

**A2**

(12) **EUROPÄISCHE PATENTANMELDUNG**

(21) Anmeldenummer: **90107161.3**

(22) Anmeldetag: **14.04.90**

(51) Int. Cl.5: **B29C 67/12, B29C 67/18**

(30) Priorität: **18.04.89 DE 3912647**
**19.05.89 DE 3916275**

(43) Veröffentlichungstag der Anmeldung:
**24.10.90 Patentblatt 90/43**

(84) Benannte Vertragsstaaten:
**DE ES FR GB IT**

(71) Anmelder: **MITRAS KUNSTSTOFFE GMBH**
**Dr. Seeling Strasse 26**
**D-8480 Weiden(DE)**

(72) Erfinder: **Gardill, Dr. Rainer**
**Fasanenweg 18**
**D-8480 Weiden(DE)**
Erfinder: **Walz, Eberhard**
**Birkenweg 5**
**D-8481 Schwarzenbach(DE)**
Erfinder: **Pippin, Helmut**
**Friedrich-Ochs-Str. 3a**
**D-8480 Weiden(DE)**

(74) Vertreter: **Tergau, Enno, Dipl.-Ing. et al**
**Tergau & Pohl Patentanwälte Hefnersplatz 3**
**Postfach 119347**
**D-8500 Nürnberg 11(DE)**

(54) **Verwendung von glasfaserhaltigen Kunststoff-Formmassen und danach hergestellter Schiebedachrahmen sowie Laminat und Verfahren zur Herstellung desselben.**

(57) Es wird die Verwendung von glasfaserhaltigen Kunststoff-Formmassen mit Zusätzen an Mikrokugeln zur Herstellung von Preßteilen vorgeschlagen, in welche Einlagen mit eingepreßt werden, die mit Preßmasse und Glasfasern zu füllende Kavernen, Vertiefungen oder Hinterschneidungen aufweisen oder die mit dünnen Ausläufern der Kunststoffmasse einschließlich der Zusätze zu hinterfüllen sind. Als bevorzugtes Anwendungsbeispiel werden Schiebedachrahmen für Automobile, Wohnwagen o.dgl. beschrieben.

Des weiteren wird ein Laminat sowie ein Verfahren zu dessen Herstellung beschrieben, welches einerseits den Vorteil hat, daß es glatte Oberflächen liefert und welches andererseits auch für den beschriebenen Verwendungszweck geeignet ist.

FIG.4

## Verwendung von glasfaserhaltigen Kunststoff- Formmassen und danach hergestellter Schiebedachrahmen sowie Laminat und Verfahren zur Herstellung desselben

Es ist bekannt, glasfaserhaltige Kunststoff-Formmassen, insbesondere aus ungesättigten Polyesterharzen, für die Herstellung von Preßteilen, beispielsweise für die Herstellung von Bauteilen, bei denen es auf geringes Gewicht bei gleichzeitig hoher Festigkeit ankommt, zu verwenden. Die in die Kunststoff-Formmassen eingebundenen Glasfasern erhöhen sowohl die Zug- und Druckfestigkeit in Richtung der Faserlängsachsen wie auch die Biegebruchfestigkeit.

Des weiteren ist es bekannt, zusätzlich oder anstelle der erwähnten Glasfasern Mikrohohlglaskugeln einzubinden, wobei ohne Verlust an Festigkeit erhebliche Gewichtseinsparungen erzielt werden können. Daneben werden auch Mikroglaskugeln, also Vollglaskugeln, in den beschriebenen Massen eingesetzt.

Typische Produkte, die aus den genannten Werkstoffen hergestellt werden, finden beispielsweise im Automobilbau, aber auch in anderen Bereichen der industriellen Technik, Anwendung. Als Beispiele werden genannt Türen für Schaltkästen, Geräteraumdeckel und Abdeckungen für Kraftfahrzeuge und Maschinen sowie Vorbauklappen für Lastkraftwagen und Busse. In typische Produkte dieser Art sind Einlegeteile, wie Scharnier- und Verriegelungselemente oder ähnliches eingeformt, die aus anderen Werkstoffen, beispielsweise Metallen oder harten Kunststoffen, bestehen. Diese Einlegeteile werden bei der Herstellung des Gesamt-Bauteiles mit eingeformt, wobei durch geeignete Formgebung der Einlegeteile dafür gesorgt wird, daß eine feste, kraftschlüssige Verbindung zwischen dem Einlegeteil und dem Formteil zustande kommt.

Um dies zu erreichen, sind verschiedene Maßnahmen bekannt. Als geeignet hat es sich erwiesen, das Einlegeteil mit Kavernen oder Vertiefungen auszurüsten, in welche beim Preßvorgang Kunststoff-Formmasse eingepreßt wird. Allerdings hat sich gezeigt, daß es in vielen Fällen schwierig ist, in diese Kavernen oder Vertiefungen zusätzlich auch einen entsprechenden Anteil an Glasfasern einzupressen. Insbesondere bei kleinen Vertiefungen oder Kavernen tritt lediglich Kunststoff-Formmasse ohne oder mit nur wenig Glasfasern -sozusagen gesiebt - in die Vertiefungen oder Kavernen ein. Das gleiche gilt für den Fall, daß dünne Ausläufer des Einlegeteiles mit glasfaserhaltiger Formmasse umpreßt oder hinterpreßt werden sollen. Die erwähnten Schwierigkeiten treten in besonderem Maße auf, wenn durch die Formgebung des Einlegeteiles bedingt, der Preßdruck auf verhältnismäßig niedrige Werte, beispielsweise auf Drücke kleiner als 60 bar, begrenzt werden muß.

Überraschenderweise wurde beobachtet, daß Kunststoff-Formmassen, die sowohl Glasfasern wie auch Gehalte an Mikrokugeln aufweisen, die erwähnten Nachteile nicht zeigen. Durch den Zusatz der Mikrokugeln wird das Fließverhalten der glasfaserhaltigen Kunststoff-Formmassen erheblich verändert und zwar in der Art, daß auch die Glasfasern mit in die erwähnten Kavernen oder Vertiefungen eintreten bzw. auch dünne Ausläufer von Einlegeteilen umfaßt werden. Die Zusätze an den erwähnten Mikrokugeln können dabei aus Mikrohohlglaskugeln oder Mikroglaskugeln (also Vollglaskugeln) bestehen oder es kann sich auch um metallisierte Glaskugeln, um Metallkugeln oder auch Keramikkugeln handeln.

Erfindungsgemäß wird deshalb die Verwendung von glasfaserhaltigen Kunststoff-Formmassen mit Zusätzen an Mikrokugeln zur Herstellung von Preßteilen vorgeschlagen, in welche Einlagen mit eingepreßt werden, die mit Preßmasse und Glasfasern zu füllende Kavernen, Vertiefungen oder Hinterschneidungen aufweisen oder die mit dünnen Ausläufern der Kunststoffmasse einschließlich der Glasfasern hinterfüllt werden müssen.

Es wurde beobachtet, daß die erwähnte Wirkung um so deutlicher eintritt, je kleiner die Mikroglaskugeln sind. Besonders bewährt haben sich Kugeln mit einem Durchmesser von 1 -250μm. Auch die Menge der erwähnten Kugeln spielt eine Rolle. Bei Versuchen haben sich solche Formmassen bewährt, die auf UP- und/oder Vinylester-Basis aufgebaut waren, welche bezogen auf glasfaserfreie UP-Masse 20-60 Vol% Mikrokugeln enthielten. Dabei hat sich gezeigt, daß mit solchen Massen selbst verhältnismäßig dünne Ausläufer des Einlegeteiles umpreßt oder hinterpreßt werden konnten, deren Dicke in der Größenordnung von 0,7 bis 1,2 mm lag. Diese Erfolge wurden sogar dann erzielt, wenn der Preßdruck auf verhältnismäßig niedrige Werte beschränkt werden mußte, beispielsweise 60-70 bar nicht übersteigen durfte.

Das erfindungsgemäße Verwendungsverfahren läßt sich mit einschichtigen glasfaserhaltigen Kunststofformmassen, die Zusätze an Mikrokugeln aufweisen, durchführen. In anderen Fällen haben sich jedoch mehrschichtige Gebilde, sogenannte Laminate, besonders bewährt. Derartige Laminate sind grundsätzlich bekannt, wenngleich auch ihre oben beschriebene Verwendung noch nicht angeregt worden ist. Die bekannten Laminate gehen beispielsweise aus der EP-A 242 891 oder aus der US-A 3 560 294 als bekannt hervor. Sie dienen zur Herstellung von Formteilen, beispielsweise nach dem Heißpreßverfahren, wobei sie mit Hilfe eines Preßstempels in einen Formhohlraum eingedrückt und dabei auf Polymerisationstemperatur erwärmt werden.

Das in der EP-A 242 981 beschriebene Produkt besteht aus insgesamt drei Schichten, wobei die beiden äußeren Schichten aus Harz gebildet sind und die innere Schicht aus Harz und Glasfasern besteht.

Zum Stande der Technik wird des weiteren noch auf die DE-B 2534188 verwiesen, in welcher Formteile beschrieben sind, welche einen schichtförmigen Aufbau haben und welche aus Laminaten der vorerwähnten Art hergestellt worden sind. Die Formteile bestehen aus einer mittleren Tragschicht aus Harz und Glasfasern,welche beidseitig mit einer Kunststoffolie laminiert ist. Die äußere Kunststoffolie ist dabei mit Mikroglaskugeln, vorzugsweise Mikrohohlglaskugeln gefüllt; die auf der entgegengesetzten Seite liegende Kunststoffolie kann andere Füllstoffteilchen, beispielsweise Kalziumkarbonat o.dgl. enthalten.

Formteile, welche aus den erwähnten Laminaten hergestellt worden sind, weisen gute Festigkeitseigenschaften bei geringem Gewicht auf. Schwierigkeiten bereitet jedoch die Forderung, eine glatte fehlerfreiei Oberfläche zu erzeugen. Dies ist insbesondere darauf zurückzuführen, daß die als Verstärkungseinlage benutzten Glasfasern bei der Formgebung leicht in Richtung Oberfläche verschoben werden und diese stellenweise durchstoßen.

Der Erfindung liegt die Aufgabe zugrunde, ein verbessertes faserverstärktes Polyesterlaminat vorzuschlagen, welches zur Herstellung von mehrschichtigen Formteilen mit glatter fehlerfreier und gut lackierbarer Oberfläche geeignet ist und welches darüber hinaus auch verwendet werden kann, um Einlagen mit einzupressen, die die oben gechilderten weiteren Bedingungen erfüllen.

Zur Lösung dieser Aufgabe wird ein Laminat benannt, welches durch folgenden Schichtenaufbau gekennzeichnet ist:
- Einer ersten Außenschicht aus Harz, Füllstoffen außer Mikrohohlglaskugeln, Initiatoren, Eindickern und gegebenenfalls weiteren Zusatzstoffen;
- einer der ersten Außenschicht gegenüberliegenden zweiten Außenschicht aus Harz, Füllstoffen, Initiatoren, Eindickern sowie gegebenenfalls weiteren Zusätzen,
die außerdem noch Mikrohohlglaskugeln enthält;
- einer Zwischenschicht aus den Bestandteilen der beiden Außenschichten sowie Verstärkungs-Einlagen aus Glasfasern, Kunststoff-Fasern oder aus diesen Fasern bestehenden Vliesen oder Geweben;
- Schutz- und Trägerfolien auf den äußeren Oberflächen der beiden Außenschichten.

Es hat sich gezeigt, daß ein derartiges Laminat einige unerwartete Eigenschaften hat. Diese Eigenschaften bestehen grundsätzlich darin, daß das Laminat bei Verarbeitung nach dem Heißpreßverfahren Formkörper ergibt mit wenigstens einer fehlerfreien Oberfläche.

Zur Herstellung der vorgeschlagenen Laminate kann von typischen UP-Harz-Rezepturen ausgegangen werden. Ausführungsformen, die sich praktisch bewährt haben, werden im folgenden angegeben:

**Beispiel 1**

| Harzzusammensetzung für die erste Außenschicht: | |
| --- | --- |
| UP-Harz | 17,5 Gew% |
| Monomere | 15,9 Gew% |
| Anorganische Füllstoffe | 63,8 Gew% |
| Initiatoren/Inhibitoren | 0,5 Gew% |
| Internes Trennmittel | 1,3 Gew% |
| Organische Zuschlagsstoffe | 0,8 Gew% |
| Eindicker | 0,2 Gew% |

| Harzzusammensetzung für die zweite Außenschicht: | |
|---|---|
| UP-Harz | 43,6 Gew% |
| Monomere | 30,1 Gew% |
| Initiatoren/Inhibitoren | 1,5 Gew% |
| Mikrohohlglaskugeln | 13,4 Gew% |
| Organische Zuschlagsstoffe, Trennmittel | 9,4 Gew% |
| Eindickerpaste | 2,0 Gew% |

**Beispiel 2**

| Harzzusammensetzung für die zweite Außenschicht | |
|---|---|
| UP-Harz | 40,1 Gew% |
| Monomere | 26,5 Gew% |
| Initiatoren | 2,0 Gew% |
| Anorganische Füllstoffe | 12,3 Gew% |
| Mikrohohlglaskugeln | 15,4 Gew% |
| Internes Trennmittel | 2,5 Gew% |
| Eindickerpaste | 1,2 Gew% |

Der Aufbau des Laminates ist vorzugsweise derart, daß die zweite Außenschicht Mikrohohlglaskugeln in Mengen von 10-55 Gew% enthält.

Des weiteren wird vorgeschlagen, daß die Zwischenschicht Glasfasern einer Länge von 6-50 mm enthält. Die Menge der im Endprodukt enthaltenen Glasfasern soll zwischen 10 und 60 Gew% liegen. Die Zwischenschicht kann zusätzlich oder anstelle der geschnittenen Glasfasern Verstärkungseinlagen aus Endlosfäden, Vliesen oder Geweben enthalten.

Zur Herstellung der Laminate kann in der Weise vorgegangen werden, daß zunächst eine erste Außenschicht aus Harz, Füllstoffen außer Mikrohohlglaskugeln usw. auf eine Trägerfolie aufgerakelt wird. Danach werden geschnittene Glasfasern und/oder Endlosfäden, Vliese oder Gewebe auf die Harzschicht aufgestreut bzw. aufgelegt. Schließlich wird eine zweite Außenschicht aus Harz, Füllstoffen usw. nebst Zusätzen an Mikrohohlglaskugeln auf eine zweite Trägerfolie aufgerakelt. Sodann wird die Harzseite der zweiten Außenschicht auf die mit Glasfasern usw. beladene Harzseite der ersten Außenschicht gelegt und das Laminat zum Vereinigen der Schichten zusammengedrückt. Das fertige Produkt kann danach aufgewickelt werden. Zu weiteren Einzelheiten des Herstellungsverfahrens die wahlweise angewandt werden können, wird auf die US-PS 3 560 294 verwiesen.

Unter Ausnutzung der vorstehenden Beobachtungen konnten insbesondere Schiebedachrahmen für Automobile, Wohnwagen o.dgl. hergestellt werden, die aus einem Kunststoffrahmen bestehen, in dessen Längsbalken Schiebeleisten eingeformt werden, die aus Metall, vorzugsweise Leichtmetall, gefertigt sind. Der Werkstoff dieser Rahmen enthielt dabei Glasfasern und Zusätze von Mikrokugeln in der erwähnten Menge. Die Schiebeleisten wiesen an den in den Kunststoffrahmen eingebetteten Seiten Vertiefungen und/oder Kavernen und/oder Hinterschneidungen auf, in die der Werkstoff des Rahmens mitsamt den darin enthaltenen Glasfasern und Zusätzen an Mikrokugeln eingepreßt wurde.

Zur Herstellung der erwähnten Formmassen können die bereits genannten mehrschichtigen Laminate eingesetzt werden. Es können aber auch einschichtige Gebilde verwendet werden, für die im folgenden typische UP-Harz-Rezepturen angegeben werden:

**Beispiel 1**

24,0 Gew% UP-Harz
16,5 Gew% Monomere

0,8 Gew% Initiator/Inhibitor-Mischung

7,4 Gew% Mikrohohlglaskugeln

5,2 Gew% organische Zuschlagstoffe und Trennmittel

1,1 Gew% Eindickerpaste

45,0 Gew% Glasfasern, 25 mm lang.

**Beispiel 2**

31,0 Gew% UP-Harz

20,5 Gew% Monomere

1,5 Gew% Initiator-Mischung

9,6 Gew% anorganischer Füllstoff

12,0 Gew% Mikrohohlglaskugeln

1,9 Gew% internes Trennmittel

1,0 Gew% Eindickerpaste

22,5 Gew% Glasfasern, 25 mm und 50 mm lang.

Die Erfindung wird im folgenden anhand der beigefügten Zeichnung näher erläutert. Es stellen dar:

Fig. 1 eine schematische Querschnittsdarstellung eines mehrschichtigen Laminates;

Fig. 2 eine schematische Darstellung des Herstellungsvorganges für ein solches Laminat;

Fig. 3 eine schematische Wiedergabe eines Kfz-Schiebedachrahmens in der Draufsicht;

Fig. 4 eine vergrößerte Darstellung eines Querschnittes entlang der Linie IV-IV der Fig. 3.

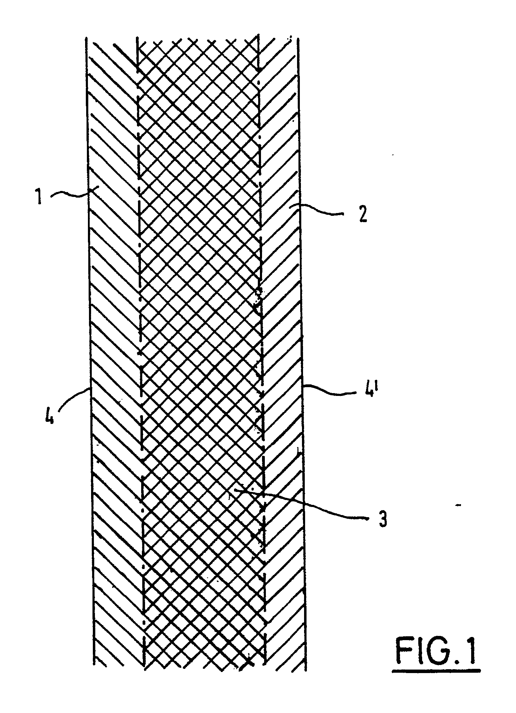

Der in Fig. 1 dargestellte Abschnitt eines Polyester-Laminates besteht aus einer ersten Außenschicht (1), einer zweiten Außenschicht (2) sowie einer Zwischenschicht (3). Die Außenschichten (1,2) sind an ihrer Oberfläche mit Schutz- und Trägerfolien (4,4′) abgedeckt.

Die erste Außenschicht (1) besteht aus nicht ausgehärtetem Polyesterharz mit Füllstoffen, Initiatoren, Eindickern und gegebenenfalls weiteren Zusatzstoffen. Unter dem Begriff "Füllstoffe" sind hier nicht Mikrohohlglaskugeln zu verstehen. Die Außenschicht (1) ist also frei von Mikrohohlglaskugeln.

Die zweite Außenschicht (2) besteht aus nicht ausgehärtetem UP-Harz, Füllstoffen, Initiatoren, Eindickern sowie gegebenenfalls weiteren Zusätzen und sie enthält außerdem noch Mikrohohlglaskugeln in Mengen von 10-55 Gew%.

Die Zwischenschicht (3) enthält die Bestandteile der beiden Außenschichten sowie außerdem noch Verstärkungseinlagen. Diese Verstärkungseinlagen können aus Glasfasern oder Kunststoff-Fasern bestehen oder aus Vliesen oder Geweben, welche aus den genannten Fasern hergestellt worden sind.

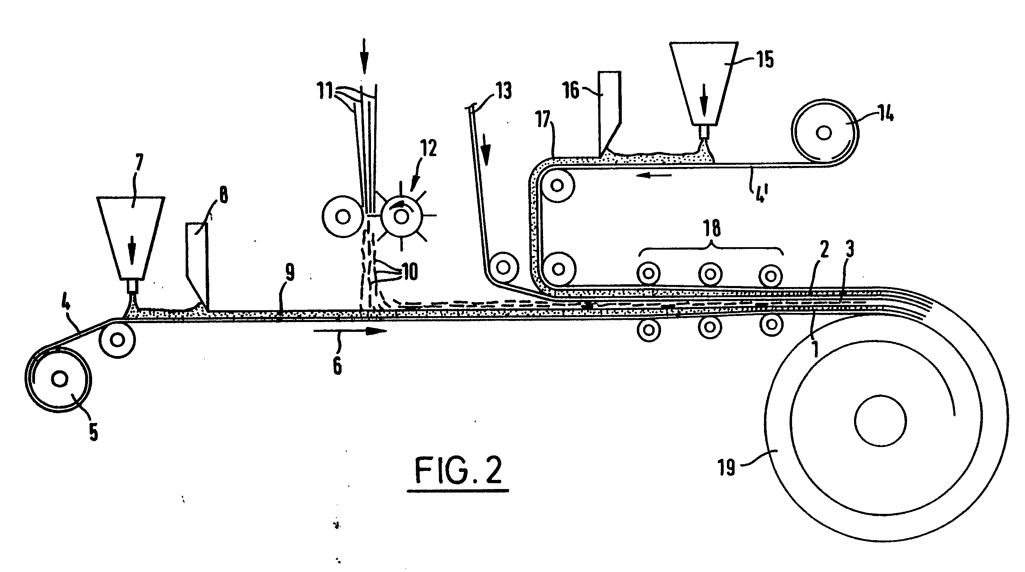

In Fig. 2 ist ein Herstellungsverfahren für das Laminat nach Fig. 1 schematisch dargestellt. Der Herstellungsvorgang beginnt damit, daß eine erste Schutz- und Trägerfolie (4) von einer Rolle (5) abgezogen und in Richtung des Pfeiles (6) fortbewegt wird. Aus einem Vorratsbehälter (7) wird nicht-ausgehärtetes UP-Harz auf die Folie aufgetragen und mittels einer Rakel (8) gleichmäßig auf dieser verteilt. Die so entstandene Harzschicht (9) wird alsdann mit geschnittenen Glasfasern (10) bedeckt. Diese Glasfasern werden als Endlosfasern (11) von oben einem Schneidwerk (12) zugeführt und von diesem sogleich auf die Harzschicht befördert. Zusätzlich oder anstelle der Glasfasern (10) können auch noch Endlosglasfasern und/oder Vlies und/oder Gewebe oder Matten (13) aus Glas- oder Kunststoff-Fasern zugeführt werden.

Eine weitere Trägerfolie (4′) wird von einer Rolle (14) abgezogen und aus einem Vorratsbehälter (15) mit nicht-ausgehärtetem UP-Harz beschichtet. Auch dieses Harz wird mit einer Rakel, welche bei (16) dargestellt ist, gleichmäßig auf der Folie verteilt und es wird sodann die mit der Harzschicht (17) bedeckte Folie (4′) mit der Harzschicht nach unten auf die Glasfaserschicht (10) aufgelegt. Das gesamte Bahnenpaket wird sodann durch eine Verdichtungszone (18) geleitet und schließlich zu einer Produktrolle (19) aufgewickelt. Die Verdichtungs- und Tränkzone (18) besteht aus mehreren Führungs- und Bearbeitungswalzen, die beispielsweise in Reihe angeordnet sein können, wie in der Zeichnung schematisch dargestellt. Die Walzen können aber auch so angeordnet sein, daß die Bahn mehrmals um einen größeren Winkel verformt wird, wie dies in der US-PS 3 560 294 dargestellt ist. Eine derartige ein- oder mehrfache Verformung fördert in erheblichem Maße die Durchtränkung der Mittelzone mit Harz.

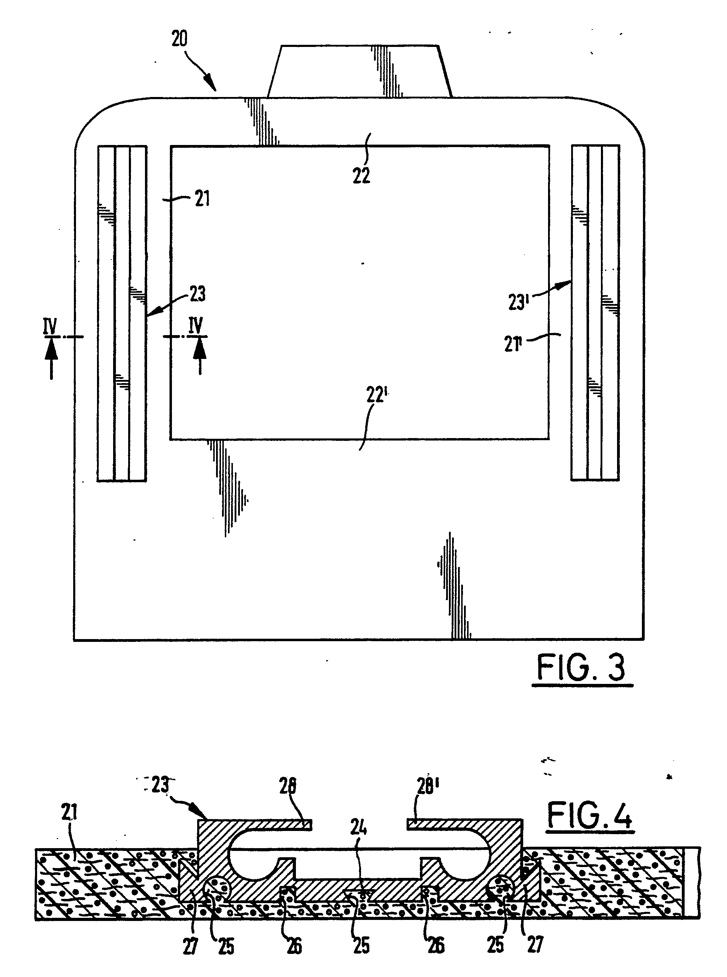

Der in Fig. 3 dargestellte Schiebedachrahmen ist als Ganzes mit 20 bezeichnet. Er besteht im wesentlichen aus den beiden Längsbalken 21,21′, welche durch Querbalken 22,22′ miteinander verbunden sind. Die Rahmenteile 21,21′,22,22′ sind aus den beschriebenen Kunststoff-Formmassen hergestellt, welche beispielsweise nach einem der vorstehend angegebenen Rezepturen zusammengesetzt sind.

In den Längsbalken 21,21′ sind aus Leichtmetall gefertigte Schiebeleisten 23,23′ eingepreßt.

Wie aus Fig. 4 ersichtlich, ist die Schiebeleiste 23 (und entsprechend auch 23′) bis zu etwa 3/4 der Wandstärke des Längsbalkens 21 in diesen eingesenkt. Die Wandstärke unter der Schiebeleiste beträgt ca. 1,2 mm. Um eine möglichst innige Verbindung zwischen der Preßmasse des Längsbalkens und der Schiebeleiste zu erzielen, sind in den unteren Balken 24 der Schiebeleiste Kavernen 25 sowie auch Vertiefungen 26 eingearbeitet. Die Schiebeleisten sind zudem noch an ihren Rändern mit Ausladungen 27 versehen. Bei der Herstellung eines derartigen Teiles kommt es darauf an, daß die Formmasse in die erwähnten Kavernen und Vertiefungen eindringt und diese vollständig ausfüllt. Um die Festigkeit der Masse zu erhalten, sollen aber auch die Glasfasern zusammen mit der Masse in die erwähnten Vertiefungen und Kavernen eintreten. Entsprechendes gilt für die Ausladungen 27, die allseits von der Masse und den Glasfasern umflossen werden sollen.

Es hat sich gezeigt, daß dies mit bekannten, glasfaserhaltigen UP-Formmassen nicht möglich ist. Werden den Formmassen jedoch zusätzlich Mikrokugeln in den genannten Mengen zugesetzt, so verbessert sich das Fließverhalten der Massen derart, daß die Kavernen und Vertiefungen vollständig mit Preßmassen einschließlich Glasfasern ausgefüllt und die Ausladungen 27 entsprechend umflossen werden.

Bei einem Formteil wie den in der Zeichnung beispielsweise dargestellten Schiebeleisten 23 kommt noch hinzu, daß dieses Formteil infolge der dünnen, fahnenartigen Schienen 28,28' nur in sehr begrenztem Maße mit Druck beaufschlagt werden kann. Steigt der Druck an diesen Teilen über etwa 60 bar, so werden die Schienen verformt; was vermieden werden muß. Überraschenderweise hat sich gezeigt, daß aber auch unter diesen Preßbedingungen mit der erfindungsgemäß zur Verwendung vorgeschlagenen Masse eine vollständige Einbettung und kraftschlüssige Verbindung der Teile erzielt werden kann.

Bezugszeichenliste

1 Erste Außenschicht
2 zweite Außenschicht
3 Zwischenschicht
4,4' Schutzfolien
5 Rolle
6 Pfeil
7 Vorratsbehälter
8 Rakel
9 Harzschicht
10 Glasfasern
11 Endlosfasern
12 Schneidwerk
13 Endlosfäden oder Vliese
14 Rolle
15 Vorratsbehälter
16 Rakel
17 Harzschicht
18 Verdichtungszone
19 Produktrolle
20 Schiebedachrahmen
21,21' Längsbalken
22,22' Querbalken
23,23' Schiebeleisten
24 unterer Balken
25 Kavernen
26 Vertiefung
27 Ausladung
28,28' Schienen

**Ansprüche**

1.Verwendung von glasfaserhaltigen Kunststoff-Formmassen mit Zusätzen an Mikrokugeln zur Herstellung von Preßteilen, in welche Einlagen mit eingepreßt werden, die mit Preßmasse und Glasfasern zu füllende Kavernen, Vertiefungen oder Hinterschneidungen aufweisen oder die mit dünnen Ausläufern der Kunststoffmasse einschließlich der Zusätze zu hinterfüllen sind.

2. Verwendung von Kunststoff-Formmassen nach Anspruch 1, deren Mikrokugeln einen Durchmesser von 1-250$\mu$m aufweisen.

3.Verwendung von Kunststoff-Formmassen nach Anspruch 1 oder 2, deren Zusätze an Mikrokugeln aus Mikroglaskugeln und/oder Mikrohohlglaskugeln, auch metallisiert und/oder Metallkugeln und/oder Keramikkugeln bestehen.

4.Verwendung von Kunststoff-Formmassen nach einem der Ansprüche 1 bis 3 auf UP- und/oder Vinylester-Basis, die bezogen auf die glasfreie UP-und/oder Vinylester-Masse 20 bis 60 Vol% Mikrokugeln enthalten.

5. Aus mehreren Schichten bestehendes faserverstärktes nicht-ausgehärtetes Polyester-Laminat, geeignet zur Verwendung nach einem der Ansprüche 1-4,
gekennzeichnet durch folgenden Schichtenaufbau:
- Einer ersten Außenschicht (1) aus Harz, Füllstoffen außer Mikrokugeln, Initiatoren, Eindickern und gegebenenfalls weiteren Zusatzstoffen;
- einer der ersten Außenschicht gegenüberliegenden zweiten Außenschicht (2) aus Harz, Füllstoffen, Initiatoren, Eindickern sowie gegebenenfalls weiteren Zusätzen, die außerdem noch Mikrohohlglaskugeln enthält;
- einer Zwischenschicht (3) aus den Bestandteilen der beiden Außenschichten sowie Verstärkungs-Einlagen aus Glasfasern, Kunststoffasern oder aus diesen Fasern bestehenden Vliesen oder Geweben;
- Schutz- und Trägerfolien (4,4') auf den äußeren Oberflächen der beiden Außenschichten.

6. Laminat nach Anspruch 5,
dadurch gekennzeichnet,
daß die zweite Außenschicht Mikrohohlglaskugeln in Mengen von 10 bis 55 Gew% enthält.

7. Laminat nach Anspruch 5 oder 6,
dadurch gekennzeichnet,
daß die Zwischenschicht Glasfasern einer Länge von 6 bis 50 mm enthält.

8. Laminat nach Anspruch 7,
dadurch gekennzeichnet,
daß die Zwischenschicht Glasfasern in Mengen von 10 bis 60 Gew% enhält.

9. Laminat nach einem der Ansprüche 5 bis 8,
dadurch gekennzeichnet,
daß die Zwischenschicht zusätzlich oder anstelle der geschnittenen Glasfasern Verstärkungseinlagen aus Endlosfäden, Vliesen oder Geweben enthält.

10. Verfahren zum Herstellen von Laminaten nach Anspruch 5,
gekennzeichnet durch folgende Arbeitsschritte:
- Aufrakeln einer ersten Außenschicht aus Harz, Füllstoffen außer Mikrokugeln usw. auf eine Trägerfolie;
- Aufstreuen von geschnittenen Glasfasern und/oder Auflegen von Endlosfäden, Vliesen oder Geweben auf die Harzschicht;
- Aufrakeln einer zweiten Außenschicht aus Harz, Füllstoffen usw. nebst Zusätzen an Mikrohohglaskugeln auf eine zweite Trägerfolie,
- Auflegen der Harzseite der zweiten Außenschicht auf die mit Glasfasern usw. beladene Harzseite der ersten Außenschicht;
- Zusammendrücken des Laminates zum Vereinigen der Schichten;
- Aufwickeln des Laminates.                     .

11. Schiebedachrahmen für Automobile, Wohnwagen o.dgl., bestehend aus einem Kunststoff-Rahmen, in dessen Längsbalken aus Metall, vorzugs weise Leichtmetall, gefertigte Schiebeleisten eingeformt sind, hergestellt nach einem der Ansprüche 1 bis 4,
dadurch gekennzeichnet,
daß der Werkstoff des Rahmens Glasfasern und Zusätze von Mikrokugeln enthält und
daß die Schiebeleisten an den in den Kunststoffrahmen eingebetteten Seiten Vertiefungen und/oder Kavernen und/oder Hinterschneidungen aufweisen, in die der Werkstoff des Rahmens mitsamt den darin enthaltenen Glasfasern und Zusätzen an Mikrokugeln eingepreßt ist.

FIG.1

FIG. 2

EP 0 393 553 A2

FIG. 3

FIG.4